(19) **Europäisches Patentamt / European Patent Office / Office européen des brevets**

(11) **EP 3 858 876 B1**

(12) **EUROPEAN PATENT SPECIFICATION**

(45) Date of publication and mention
of the grant of the patent:
**07.02.2024 Bulletin 2024/06**

(21) Application number: **19864279.5**

(22) Date of filing: **17.09.2019**

(51) International Patent Classification (IPC):
*C08G 63/672* (2006.01)  *C08F 220/20* (2006.01)
*B29C 64/135* (2017.01)  *B29C 64/314* (2017.01)
*B33Y 70/00* (2020.01)  *B33Y 80/00* (2015.01)
*C08F 220/26* (2006.01)  *C08F 290/06* (2006.01)
*C08G 63/47* (2006.01)

(52) Cooperative Patent Classification (CPC):
(C-Sets available)
**B33Y 70/00; C08F 290/061; C08G 63/47;
C08G 63/672; B29C 64/124; B33Y 10/00** (Cont.)

(86) International application number:
**PCT/JP2019/036306**

(87) International publication number:
**WO 2020/066736 (02.04.2020 Gazette 2020/14)**

(54) **CURABLE RESIN COMPOSITION, CURED PRODUCT, AND THREE-DIMENSIONAL OBJECT**

HÄRTBARE HARZZUSAMMENSETZUNG, GEHÄRTETES PRODUKT UND DREIDIMENSIONALES OBJEKT

COMPOSITION DE RÉSINE DURCISSABLE, PRODUIT DURCI, ET OBJET TRIDIMENSIONNEL

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.09.2018 JP 2018178785**

(43) Date of publication of application:
**04.08.2021 Bulletin 2021/31**

(73) Proprietor: **DIC Corporation
Tokyo 174-8520 (JP)**

(72) Inventors:
• **DEGUCHI, Yoshinobu
Ichihara-shi, Chiba 290-8585 (JP)**
• **THIMTHONG, Narumon
Ichihara-shi, Chiba 290-8585 (JP)**
• **YOSHIZAWA, Masakazu
Ichihara-shi, Chiba 290-8585 (JP)**
• **ITO, Daisuke
Tokyo 103-8233 (JP)**

(74) Representative: **TBK
Bavariaring 4-6
80336 München (DE)**

(56) References cited:
**JP-A- H02 248 414    JP-A- H02 248 414
JP-A- 2004 010 771    JP-A- 2004 010 771
JP-A- 2015 010 164    JP-A- 2015 010 164
JP-A- 2015 010 169    JP-A- 2015 010 169
JP-A- 2018 122 499    US-A1- 2012 329 972**

**(Cont. next page)**

(52) Cooperative Patent Classification (CPC): (Cont.)

C-Sets
**C08F 290/061, C08F 220/1811;**
**C08F 290/061, C08F 220/56;**
**C08F 290/061, C08F 220/56, C08F 222/102**

**Description**

Technical Field

The present invention relates to a curable resin composition, a cured product, and a three-dimensional shaped article.

Background Art

An optical three-dimensional shaping method (optical shaping method) which has recently been used as a method for producing a resin formed product includes selectively polymerizing and curing a curable resin composition with active energy rays, such as ultraviolet laser or the like, based on the three-dimensional shape data designed by a three-dimensional design system such as three-dimensional CAD, thereby forming a three-dimensional shaped article. This optical three-dimensional shaping method can cope with a complicated shape difficult to form by cutting and has a short production time and easy handleability, and thus the method is widely used for producing prototype models of industrial products besides resin formed products.

A typical example of the optical three-dimensional shaping method is a method including irradiating a liquid photocurable resin placed in a vessel from above with a spot-like ultraviolet laser beam controlled by a computer to cure a layer having a predetermined thickness, supplying the liquid resin on the layer after lowering the resultant shaped object by one layer, and similarly curing by irradiation with the ultraviolet laser beam to laminate layers. This operation is repeated to form a three-dimensional shaped article. Also, in addition to the stippling system using a spot-like ultraviolet laser, a surface exposure system has recently been increased, in which a pattern layer with a predetermined sectional shape is cured by irradiation from below with ultraviolet light through a transparent vessel, in which a photocurable resin is placed, using a light source other than a laser such as LED or the like through a planar drawing mask referred to as DMD (digital micromirror device) in which a plurality of digital micromirror shutters are planarly arranged, the resultant shaped object is lifted by one layer, and then a next layer is cured by irradiation by the same method as described above to sequentially laminate layers, thereby forming a three-dimensional shaped article.

The characteristics required for the photocurable resin used in the optical three-dimensional shaping method include various ones such as low viscosity, the ability to form a smooth liquid surface, having excellent curability, etc. A resin composition containing a radical polymerizable compound as a main component is known as the photocurable resin (refer to, for example, Patent Literatures 1 and 2), but it has the problems such as the occurrence of deformation such as warping or the like during curing.

JP H02-248414 A relates to a polyester polyol being obtained by polycondensing a diol component containing at least 20 mol% 2-butyl-2-ethyl-1,3-propanediol and/or 2,2-diethyl-1,3-propanediol with a dicarboxylic acid such as adipic acid, wherein the polyester polyol is mixed with (meth)acrylic acid and optionally 0.001-0.05wt.% radical polymerization inhibitor and the mixture is subjected to esterification at 170-180°C to obtain a polyester acrylate of an average MW of 400-10000.

JP 2004-010771 A relates to a radical-polymerizable resin composition containing at least one (meth)acrylate oligomer (A) selected from the group consisting of vinyl ester oligomers, urethane (meth)acrylate oligomers and polyester (meth)acrylate oligomers, and an oligomer (B) having one or more maleic acid ester and/or fumaric acid ester units, and a polymerizable monomer (C), wherein the molar ratio of the (meth)acrylate groups to the maleic acid ester and/or fumaric acid ester units is (1:0.1) to (1:2).

JP 2015-010169 A relates to a resin composition for optical three-dimensional molding comprising (A) an oligomer at least having one or more α,β-unsaturated double bond group and (B) an α,β--unsaturated double bond group-containing compound having a ring structure of three or more rings (excluding one corresponding to the oligomer (A) and excluding one directly bonded to an α,β-unsaturated double bond group), in a molecule, as an essential component.

JP 2015-010164 A relates to a resin composition for optical three-dimensional molding comprising (A) an oligomer at least having one or more α,β-unsaturated double bond group and (B) an α,β-unsaturated double bond group-containing compound (excluding one corresponding to the oligomer (A)), in a molecule, wherein the resin composition satisfies the following conditions: (1) the α,β-unsaturated double bond group-containing compound (B) has one or more amide group; and (2) the α,β-unsaturated double bond group-containing compound (B) further has a hydroxy group and/or alkoxy group.

Therefore, there is demand for a material having low viscosity and being capable of forming a cured product having excellent mechanical properties.

Citation List

Patent Literature

PTL 1: Japanese Unexamined Patent Application Publication No. 7-228644
PTL 2: Japanese Unexamined Patent Application Publication No. 2008-189782

Summary of Invention

Technical Problem

A problem to be solved by the invention is to provide a curable resin composition having low viscosity and producing a cured product having excellent mechanical properties and also to provide a cured product and a three-dimensional shaped article.

Solution to Problem

As a result of earnest research to solve the problem, the inventors found that the problem can be solved by using a curable resin composition containing a specific polyester resin and a specific acrylate compound, leading to the achievement of the present invention.
That is, the present invention relates to a curable resin composition containing a polyester resin (A) having a (meth)acryloyl group and a monofunctional (meth)acrylate compound (B1) and/or a difunctional (meth)acrylate compound (B2). The average functional group number of (meth)acryloyl groups possessed by the polyester resin (A) is within a range of 1.8 or more and 2.2 or less, the content of the polyester resin (A) in the curable resin composition is 50% by mass or more, and the monofunctional (meth)acrylate compound (B1) is one or more selected from the group consisting of (meth)acryloyl morpholine, isobornyl (meth)acrylate, dicyclopentenyl (meth)acrylate, and dicyclopentanyl (meth)acrylate. The present invention also relates to a cured product and a three-dimensional shaped article.

Advantageous Effects of Invention

A curable resin composition of the present invention has low viscosity and is capable of forming a cured product having excellent mechanical properties, and thus can be preferably used as a resin composition for optical three-dimensional shaping. In the present invention, the expression "excellent mechanical properties" represents excellent "elastic modulus", "elongation", and "impact resistance".

Description of Embodiments

A curable resin composition of the present invention is characterized by containing a polyester resin (A) having a (meth)acryloyl group and a monofunctional (meth)acrylate compound (B1) and/or a difunctional (meth)acrylate compound (B2) .
In the present invention, the term "(meth)acrylate" represents acrylate and/or methacrylate. Also, the term "(meth)acryloyl" represents acryloyl and/or methacryloyl. Further, the term "(meth)acryl" represents acryl and/or methacryl.
The polyester resin (A) necessarily has a (meth)acryloyl group.
The polyester resin (A) is, for example, a resin produced by esterification reaction of a polyhydric carboxylic acid with (poly)alkylene glycol and a compound having a (meth)acryloyl group and a carboxyl group in one molecule.
Examples of the polyhydric carboxylic acid include aliphatic polyhydric carboxylic acids such as succinic acid, adipic acid, azelaic acid, sebacic acid, glutaric acid, pimelic acid, suberic acid, dodecane dicarboxylic acid, maleic acid, fumaric acid, and the like; alicyclic polyhydric carboxylic acids such as 1,3-cyclopentane dicarboxylic acid, 1,2-cyclohexane dicarboxylic acid, 1,3-cyclohexane dicarboxylic acid, 1,4-cyclohexane dicarboxylic acid, and the like; and aromatic polyhydric carboxylic acids such as orthophthalic acid, isophthalic acid, terephthalic acid, naphthalene dicarboxylic acid, biphenyl dicarboxylic acid, 1,2-bis(phenoxy)ethane-p,p'-dicarboxylic acid, p-hydroxybenzoic acid, p-(2-hydroxyethoxy)benzoic acid, and the like. These polyhydric carboxylic acids can be used alone or in combination of two or more. Among these, the aromatic polyhydric carboxylic acids are preferred because a curable resin composition capable of forming a cured product having excellent mechanical properties can be produced.
Examples of the (poly)alkylene glycol include ethylene glycol, diethylene glycol, triethylene glycol, polyethylene glycol, propylene glycol, dipropylene glycol, tripropylene glycol, polypropylene glycol, 1,3-butanediol, 1,4-butanediol, polytetramethylene glycol, neopentyl glycol, 3-methylpentanediol, and the like. These (poly)alkylene glycols can be used alone or in combination of two or more. Among these, ethylene glycol, diethylene glycol, and triethylene glycol are preferred because a curable resin composition capable of forming a cured product having high elastic modulus can be produced.

Examples of the compound having a (meth)acryloyl group and a carboxyl group in one molecule include (meth)acrylic acid, a (meth)acrylic acid dimer, an acid anhydride adduct of pentaerythritol triacrylate, an acid anhydride adduct of hydroxethyl acrylate, an acid anhydride adduct of lactone-added hydroxyethyl acrylate, and the like. These compounds can be used alone or in combination of two or more. Among these, (meth)acrylic acid is preferred because a curable resin composition capable of forming a cured product having high elastic modulus and excellent impact resistance can be produced.

A method for producing the polyester resin (A) is not particularly limited, and any production method may be used. The resin (A) may be produced by, for example, a method of reacting all reaction raw materials at once or a method of sequentially reacting reaction raw materials. Because of easy control of the reaction, a particularly preferred method includes first dehydration condensation reaction of the polyhydric carboxylic acid with the (poly)alkylene glycol and further dehydration condensation reaction of the resultant reaction product with the compound having a (meth)acryloyl group and a carboxyl group in one molecule. The reaction can be performed by, for example, a method in which dehydration condensation reaction of the polyhydric carboxylic acid with the (poly)alkylene glycol is performed within a temperature range of 200°C to 280°C until the acid value becomes 5 mg/KOH or less, and then the compound having a (meth)acryloyl group and a carboxyl group in one molecule and an organic solvent are added and subjected to dehydration condensation reaction in the presence of a catalyst under reflux at the boiling point of the organic solvent.

Examples of the catalyst include acid catalysts: inorganic acids such as hydrochloric acid, sulfuric acid, phosphoric acid, and the like; organic acids such as methanesulfonic acid, paratoluenesulfonic acid, oxalic acid, and the like; Lewis acids such as boron trifluoride, anhydrous aluminum chloride, zinc chloride, and the like; and the like. These catalysts can be used alone or in combination of two or more.

Examples of the organic solvent include solvents having a boiling point within a range of 100°C to 140°C, such as toluene, xylene, methylcyclohexane, methyl isobutyl ketone, normal butyl acetate, and the like.

Because a curable resin composition capable of forming a cured product having excellent elongation and impact resistance can be produced, the average functional group number of (meth)acryloyl groups possessed by the polyester resin (A) is within a range of 1.8 or more and 2.2 or less. In the present invention, the term "average functional group number" represents the number of (meth)acryloyl groups per molecule in the polyester resin (A).

The average functional group number is calculated by the following formula:

$$\text{Average functional group number} = [(\text{terminal group equivalent})/\{\text{number-average molecular weight (Mn) of polyester resin (A)}\}]$$

$$\text{Terminal group equivalent} = 56100/[\{\text{hydroxyl value of polyester resin (A)}\} + \{\text{acid value of polyester resin (A)}\}]$$

In the present invention, the number-average molecular weight (Mn) is a value measured by using gel permeation chromatography (GPC). In addition, in the present invention, the hydroxyl value and acid value are values measured based on the neutralization titration method of JIS K 0070 (1992).

In addition, because a curable resin composition having low viscosity and being capable of forming a cured product having excellent mechanical properties can be produced, the number-average molecular weight (Mn) of the polyester resin (A) is preferably within a range of 500 to 3,000.

Further, because a curable resin composition having low viscosity and being capable of forming a cured product having excellent mechanical properties can be produced, the content of the polyester resin (A) in the curable resin composition of the present invention is 50% by mass or more and preferably within a range of 60% to 90% by mass.

The monofunctional (meth)acrylate compound (B1) is one or more selected from isobornyl (meth)acrylate, (meth)acryloyl morpholine, dicyclopentenyl (meth)acrylate, and dicyclopentanyl (meth)acrylate. These monofunctional (meth)acrylate compounds can be used alone or in combination of two or more. Among these, because a curable resin composition capable of forming a cured product having high elastic modulus can be produced, the monofunctional (meth)acrylate compound is preferably a compound whose polymer has a glass transition temperature (abbreviated as "Tg" hereinafter) of 80°C or more. In particular, a (meth)acrylate compound having a cyclic structure such as a condensed polycyclic structure, a heterocyclic structure, or the like is preferred, and acryloyl morpholine (Tg: 145°C), isobornyl acrylate (Tg: 94°C), isobornyl methacrylate (Tg: 180°C), dicyclopentenyl acrylate (Tg: 120°C), dicyclopentanyl acrylate (Tg: 120°C), dicyclopentanyl methacrylate (Tg: 175°C) are more preferred, and acryloyl morpholine is particularly preferred.

When a combination of two or more of the monofunctional (meth)acrylate compounds (B1) is used, a copolymer of the two or more monofunctional (meth)acrylate compounds preferably has a Tg of 80°C or more.

Examples of the difunctional (meth)acrylate compound (B2) include 1,6-hexanediol di(meth)acrylate, 1,4-butanediol di(meth)acrylate, 1,3-butylene glycol di(meth)acrylate, 1,9-nonanediol di(meth)acrylate, 1,10-decanediol di(meth)acrylate, neopentyl glycol di(meth)acrylate, ethylene oxide-modified 1,6-hexanediol di(meth)acrylate, hydroxypivalic acid neopentyl glycol di(meth)acrylate, propylene oxide-modified neopentyl glycol di(meth)acrylate, tripropylene glycol di(meth)acrylate, dipropylene glycol di(meth)acrylate, triethylene glycol di(meth)acrylate, di(meth)acrylate of ethylene oxide-modified bisphenol A, di(meth)acrylate of propylene oxide-modified bisphenol A, di(meth)acrylate of ethylene oxide-modified bisphenol F, tricyclodecane dimethanol di(meth)acrylate, tetraethylene glycol di(meth)acrylate, polyethylene glycol di(meth)acrylate, polypropylene glycol di(meth)acrylate, tri(meth)acrylate of propylene oxide-modified glycerin, 2-hydroxy-3-acryloyloxypropyl (meth)acrylate, di(meth)acrylate of ethylene oxide-modified bisphenoxyethanol fluorene, polytetramethylene glycol di(meth)acrylate, ethoxylated isocyanuric acid tri(meth)acrylate, phenoxyethylene glycol (meth)acrylate, stearyl (meth)acrylate, 2-(meth)acryloyloxyethyl succinate, trifluoroethyl (meth)acrylate, 3-methyl-1,5-pentanediol di(meth)acrylate, 2,3-[(meth)acryloyloxymethyl] norbornane, 2,5-[(meth)acryloyloxymethyl] norbornane, 2,6-[(meth)acryloyloxymethyl] norbornane, 1,3-adamantyl di(meth)acrylate, 1,3-bis[(meth)acryloyloxymethyl] adamantane, tris(hydroxyethyl) isocyanuric acid di(meth)acrylate, 3,9-bis[1,1-dimethyl-2-(meth)acryloyloxyethyl]-2,4,8,10-tetraoxaspiro[5.5] undecane, and the like. These difunctional (meth)acrylate compounds can be used alone or in combination of two or more. Among these, because a curable resin composition capable of forming a cured product having high elastic modulus can be produced, the difunctional (meth)acrylate compound is preferably a compound whose polymer has a Tg of 80°C or more. In particular, dipropylene glycol diacrylate (Tg: 102°C) and tricyclodecanedimethanol diacrylate (Tg: 110°C) are more preferred.

When a combination of two or more of the difunctional (meth)acrylate compounds (B2) is used, a copolymer of the two or more difunctional (meth)acrylate compounds used in combination preferably has a Tg of 80°C or more.

Also, the monofunctional (meth)acrylate compound (B1) and the difunctional (meth)acrylate compound (B2) can be used in combination. In this case, a copolymer of the (meth)acrylate compounds used in combination preferably has a Tg of 80°C or more.

If required, the monofunctional (meth)acrylate compound (B1) and/or the difunctional (meth)acrylate compound (B2) can also be used in combination with a tri- or higher-functional (meth)acrylate compound (B3) within a range where the effect of the present invention is not impaired. Also, in this case, a copolymer of the (meth)acrylate compounds used in combination preferably has a Tg of 80°C or more.

Examples of the tri- or higher-functional (meth)acrylate compound include trifunctional (meth)acrylates such as EO-modified glycerol acrylate, PO-modified glycerol triacrylate, pentaerythritol triacrylate, EO-modified phosphoric acid triacrylate, trimethylolpropane triacrylate, caprolactone-modified trimethylolpropane triacrylate, HPA-modified trimethylolpropane triacrylate, (EO)- or (PO)-modified trimethylolpropane triacrylate, alkyl-modified dipentaerythritol triacrylate, tris(acryloxyethyl) isocyanurate, and the like;

tetrafunctional (meth)acrylates such as ditrimethylolpropane tetraacrylate, pentaerythritol ethoxy tetraacrylate, pentaerythritol tetraacrylate, and the like;

pentafunctional (meth)acrylates such as dipentaerythritol hydroxy pentaacrylate, alkyl-modified dipentaerythritol pentaacrylate, and the like; and

hexafunctional (meth)acrylates such as dipentaerythritol hexaacrylate, and the like. These tri- or higher-functional (meth)acrylates can be used alone or in combination of two or more.

The curable resin composition of the present invention further contains a photopolymerization initiator. Examples of the photopolymerization initiator include 1-hydroxycyclohexyl phenyl ketone, 2-hydroy-2-methyl-1-phenylpropan-1-one, 1-[4-(2-hydroxyethoxy)phenyl]-2-hydroxy-2-methyl-1-propan-1-one, thioxanthone and thioxanthone derivatives, 2,2'-dimethoxy-1,2-diphenylmethan-1-onr, diphenyl(2,4,6-trimethoxybenzoyl)phosphine oxide, 2,4,6-trimethylbenzoyldiphenylphosphine oxide, bis(2,4,6-trimethylbenzolyl)phenylphosphine oxide, 2-methyl-1-(4-methylthiophenyl)-2-morpholinopropan-1-one, 2-benzyl-2-dimethylamino-1-(4-morpholinophenyl)-1-butanone, and the like.

Examples of commercial products of the other photopolymerization initiator include "Omnirad-1173", "Omnirad-184", "Omnirad-127", "Omnirad-2959", "Omnirad-369", "Omnirad-379", "Omnirad-907", "Omnirad-4265", "Omnirad-1000", "Omnirad-651", "Omnirad-TPO", "Omnirad-819", "Omnirad-2022", "Omnirad-2100", "Omnirad-754", "Omnirad-

6

784", "Omnirad-500", and "Omnirad-81" (manufactured by IGM Corporation), "Kayacure-DETX", "Kayacure-MBP", "Kayacure-DMBI", "Kayacure-EPA", and "Kayacure-OA" (manufactured by Nippon Kayaku Co., Ltd.), "Baicure-10" and "Baicure-55" (manufactured by Stauffer Chemical Company), "Trigonal P1" (manufactured by Akzo Co., Ltd.), "Sandray 1000" (manufactured by Sandoz Inc.), "Deap" (manufactured by Upjohn Co., Ltd.), "Quantacure-PDO", "Quantacure-ITX", and "Quantacure-EPD" (manufactured by Ward Blenkinsop Co., Ltd.), "Runtecure-1104" (manufactured by Runtec Corporation), and the like.

The amount of the photopolymerization initiator added is, for example, preferably within a range of 1 to 20% by mass in the curable resin composition.

In addition, if required, a photosensitizer can be further added to the curable resin composition in order to improve curability.

Examples of the photosensitizer include amine compounds such as an aliphatic amine, an aromatic amine, and the like; urea compounds such as o-tolylthiourea and the like; and sulfur compounds such as sodium diethyl dithiophosphate, s-benzyl isothiouronium-p-toluene sulfonate, and the like.

In addition, if required, the curable resin composition of the present invention can also contain various additives such as an ultraviolet absorber, an antioxidant, a polymerization inhibitor, a silicon-based additive, a fluorine-based additive, a silane coupling agent, a phosphate ester compound, organic beads, inorganic fine particles, an organic filler, an inorganic filler, a rheology control agent, a defoaming agent, a coloring agent, and the like.

Examples of the ultraviolet absorber include triazine derivatives such as 2-[4-{(2-hydroxy-3-dodecyloxypropyl)oxy}-2-hydroxyphenyl]-4,6-bis(2,4-dimethylphenyl)-1,3,5-triazine, 2-[4-{(2-hydroxy-3-tridecyloxypropyl)oxy}-2-hydroxyphenyl]-4,6-bis(2,4-dimethylphenyl)-1,3,5-triazine, and the like, 2-(2'-xanthenecarboxy-5'-methylphenyl)benzotriazole, 2-(2'-o-nitrobenzyloxy-5'-methylphenyl)benzotriazole, 2-xanthenecarboxy-4-dodecyloxy benzophenone, 2-o-nitrobenzyloxy-4-dodecyloxy benzophenone, and the like. These ultraviolet absorbers can be used alone or in combination of two or more.

Examples of the antioxidant include a hindered phenol-based antioxidant, a hindered amine-based antioxidant, an organic sulfur-based antioxidant, a phosphate ester-based antioxidant, and the like. These antioxidants can be used alone or in combination of two or more.

Examples of the polymerization inhibitor include hydroquinone, methoquinone, di-tert-butylhydroquinone, p-methoxyphenol, butylhydroxytoluene, nitrosamine salts, and the like.

Examples of the silicon-based additive include polyorganosiloxanes having an alkyl group or a phenyl group, such as dimethylpolysiloxane, methylphenylpolysiloxane, cyclic dimethylpolysiloxane, methyl hydrogen polysiloxane, polyether-modified dimethylpolysiloxane copolymer, polyester-modified dimethylpolysiloxane copolymer, fluorine-modified dimethylpolysiloxane copolymer, amino-modified dimethylpolysiloxane copolymer, and the like, polydimethylsiloxane having a polyether-modified acryl group, polydimethylsiloxane having a polyester-modified acryl group, and the like. These silicon-based additives can be used alone or in combination of two or more.

Examples of the fluorine-based additive include "MegaPhase" Series manufactured by DIC Corporation and the like. These fluorine-based additives can be used alone or in combination of two or more.

Examples of the silane coupling agent include vinyl-based silane coupling agents such as vinyltrichlorosilane, vinyltrimethoxysilane, vinyltriethoxysilane, 2-(3,4-epoxycyclohexyl) ethyltrimethoxysilane, 3-glycidoxypropyl trimethoxysilane, 3-glycidoxypropyl methyldiethoxysilane, 3-glycidoxypropyl triethoxysilane, p-styryltrimethoxysilane, 3-methacryloxypropylmethyl dimethoxysilane, 3-methacryloxypropyl trimethoxysilane, 3-methacryloxypropyl methyldiethoxysilane, 3-methacryloxypropyl triethoxysilane, 3-acryloxypropyl trimethoxysilane, N-2-(aminoethyl)-3-aminopropylmethyl dimethoxysilane, N-2-(aminoethyl)-3-aminopropyl trimethoxysilane, N-2-(aminoethyl)-3-aminopropyl triethoxysilane, 3-aminopropyl trimethoxysilane, 3-aminopropyl triethoxysilane, 3-triethoxysilyl-N-(1,3-dimethyl-butylidene) propylamine, N-phenyl-3-aminopropyl trimethoxysilane, N-(vinylbenzyl)-2-aminoethyl-3-aminopropyl trimethoxysilane hydrochloride, special aminosilane, 3-ureidopropyl triethoxysilane, 3-chloropropyl trimethoxysilane, 3-mercaptopropylmethyl dimethoxysilane, 3-mercaptopropyl trimethoxysilane, bis(triethoxysilylpropyl) tetrasulfide, 3-isocyanatopropyl triethoxysilane, allyltrichlorosilane, allyltriethoxysilane, allyltrimethoxysilane, diethoxymethyl vinylsilane, vinyltrimethoxysilane, vinyltriethoxysilane, vinyltris(2-methoxyethoxy)silane, and the like;

epoxy-based silane coupling agents such as diethoxy(glycidyloxypropyl) methylsilane, 2-(3,4-epoxycyclohexyl)ethyl trimethoxysilane, 3-glycidoxypropyl trimethoxysilane, 3-glycidoxypropylmethyl diethoxysilane, 3-glycidoxypropyl triethoxysilane, and the like;

styrene-based silane coupling agents such as p-styryl trimethoxysilane and the like;

(meth)acryloxy-based silane coupling agents such as 3-methacryloxypropylmethyl dimethoxysilane, 3-acryloxypropyl trimethoxysilane, 3-methacryloxypropy trimethoxysilane, 3-methacryloxypropylmethyl diethoxysilane, 3-methacryloxypropyl triethoxysilane, and the like;

amino-based silane coupling agents such as N-2(aminoethyl) 3-aminopropylmethyl dimethoxysilane, H-2(aminoethyl) 3-aminopropyl trimethoxysilane, N-2(aminoethyl) 3-aminopropyl triethoxysilane, 3-aminopropyl trimethoxysilane, 3-aminopropyl triethoxysilane, 3-triethoxysilyl-N-(1,3-dimethyl-butylidene)propylamine, N-phenyl-3-aminopropyl trimethoxysilane, and the like;

ureido-based silane coupling agents such as 3-ureidopropyl triethoxysilane and the like;

chloropropyl-based silane coupling agents such as 3-chloropropyl trimethoxysilane and the like;

mercapto-based silane coupling agents such as 3-mercaptopropylmethyl dimethoxysilane, 3-mercaptopropyl trimethoxysilane, and the like;

sulfide-based silane coupling agents such as bis(triethoxysilylpropyl) tetrasulfide and the like; and

isocyanate-based silane coupling agents such as 3-isocyanatopropyl triethoxysilane and the like. These silane coupling agents can be used alone or inn combination of two or more.

Examples of the phosphate ester compound include those having a (meth)acryloyl group in its molecular structure, and examples of commercial products thereof include "Kayamer PM-2" and "Kayamer PM-21" manufactured by Nippon Kayaku Co., Ltd., "Lightester P-1M", "Lightester P-2M" and "Lightacrylate P-1A(N)" manufactured by Kyoeisha Chemical Co., Ltd., "SIPOMER PAM 100", "SIPOMER PAM 200", "SIPOMER PAM 300", and "SIPOMER PAM 4000" manufactured by SOLVAY Co., Ltd., "Viscoat #3PA" and "Viscoat #3PMA" manufactured by Osaka Organic Chemical Industry, Ltd., "New Frontier S-23A" manufactured by Dai-ichi Kogyo Seiyaku Co., Ltd., "SIPOMER PAM 5000" manufactured by SOLVAY Co., Ltd., which is a phosphate ester compound having an allyether group in its molecular structure, and the like.

Examples of the organic beads include polymethyl methacrylate beads, polycarbonate beads, polystyrene beads, polyacrylstyrene beads, silicone beads, glass beads, acrylic beads, benzoguanamine-based resin beads, melamine-based resin beads, polyolefin-based resin beads, polyester-based resin beads, polyamide resin beads, polyimide-based resin beads, polyfluoroethylene resin beads, polyethylene resin beads, and the like. These organic beads can be used alone or in combination of two or more. In addition, the average particle diameter of the organic beads is preferably within a range of 1 to 10 μm.

Examples of the inorganic fine particles include fine particles of silica, alumina, zirconia, titania, barium titanate, antimony trioxide, and the like. These types of inorganic fine particles can be used alone or in combination of two or more. In addition, the average particle diameter of the inorganic fine particles is preferably within a range of 95 to 250 nm and particularly preferably within a range of 100 to 180 nm.

When the inorganic fine particles are contained, a dispersion auxiliary agent can be used. Examples of the dispersion auxiliary agent include phosphate ester compounds such as isopropyl acid phosphate, triisodecyl phosphite, ethylene oxide-modified phosphoric acid methacrylate, and the like. These dispersion auxiliary agents can be used alone or in combination or two or more. Examples of commercial products of the dispersion auxiliary agent include "Kayamer PM-21" and "Kayamer PM-2" manufactured by Nippon Kayaku Co., Ltd., "Lightester P-2M" manufactured by Kyoeisha Chemical Co., Ltd., and the like.

Examples of the organic filler include plant-derived solvent-insoluble materials such as cellulose, lignin, cellulose nanofibers, and the like.

Examples of the inorganic filler include glass (particles), silica (particles), alumina silicate, talc, mica, aluminum hydroxide, alumina, calcium carbonate, carbon nanotubes, and the like.

Examples of the rheology control agent include amide-waxes such as "Disperlon 6900" manufactured by Kusumoto Chemicals, Ltd. and the like; urea-based rheology control agents such as "BYK410" manufactured by BYK Chemie Co., Ltd. and the like; polyethylene-wax such as "Disperlon 4200" manufactured by Kusumoto Chemicals, Ltd. and the like; cellulose-acetate-butylate such as "CAB-381-2" and "CAB 32101" manufactured by Eastman Chemical Products, Inc.; and the like.

Examples of the defoaming agent include an oligomer containing fluorine or silicon atoms, and oligomers such as a higher fatty acid, an acrylic polymer, and the like.

Examples of the coloring agent include a pigment, a dye, and the like.

A well-known common inorganic pigment or organic pigment can be used as the pigment.

Examples of the inorganic pigment include titanium oxide, antimony red, Bengala, cadmium red, cadmium yellow, cobalt blue, Prussian blue, ultramarine, carbon black, graphite, and the like.

Examples of the organic pigment include a quinacridone pigment, a quinacridone/quinone pigment, a dioxazine pigment, a phthalocyanine pigment, an anthrapyrimidine pigment, an anthanthrone pigment, an indanthrone pigment, a flavanthrone pigment, a perylene pigment, a diketopyrrolopyrrole pigment, a perinone pigment, a quinophthalone pigment, an anthraquinone pigment, a thioindigo pigment, a benzimidazolone pigment, an azo pigment, and the like. These pigments can be used alone or in combination of two or more.

Examples of the dye include azo dyes such as monoazo/disazo pigments and the like, a metal complex dye, a naphthol dye, an anthraquinone dye, an indigo dye, a carbonium dye, a quinoneimine dye, a cyanine dye, a quinoline dye, a nitro dye, a nitroso dye, a benzoquinone dye, a naphthoquinone dye, a naphthalimide dye, a perinone dye, a phthalocyanine dye, a triarylmethane-based dye, and the like. These dyes can be used alone or in combination or two or more.

A cured product of the present invention can be produced by irradiating the curable resin composition described above with active energy rays. Examples of the active energy rays include ultraviolet light, ionizing radiation such as electron beams, α-rays, β-rays, γ-rays, and the like. When ultraviolet light is used as the active energy rays, irradiation may be performed in an inert gas atmosphere or an air atmosphere for efficient curing reaction by ultraviolet light.

In view of practicality and economy, an ultraviolet lamp is generally used as an ultraviolet generation source. Examples thereof include a low-pressure mercury lamp, a high-pressure mercury lamp, an ultrahigh-pressure mercury lamp, a xenon lamp, a gallium lamp, a metal halide lamp, solar light, LED, and the like.

The integrated light amount of the active energy rays is not particularly limited, but is preferably 50 to 5,000 $mJ/cm^2$ and more preferably 300 to 1,000 $mJ/cm^2$. The integrated light amount within the range described above is preferred because the occurrence of an uncured portion can be prevented or suppressed.

A three-dimensional shaped article of the present invention can be formed by a known optical three-dimensional shaping method.

Examples of the optical three-dimensional shaping method include a laser beam shaping method, an ink jet optical shaping method, and the like. The laser beam shaping method is a method in which a liquid curable resin composition containing a light-energy absorber is selectively irradiated with active energy rays so as to obtain a cured layer having a desired pattern to form a cured layer, and next an uncured liquid curable resin composition is supplied on the cured layer and similarly irradiated with active energy rays to newly form a cured layer continuous with the cured layer. The operation of laminating the layers is repeated, finally forming an intended three-dimensional shaped article. Examples of the method include a stereolithography (SLA) system and a digital light processing (DLP) system.

The stereolithography (SLA) system is a three-dimensional shaping system in which a vessel of the liquid curable resin composition is irradiated with active energy rays to cure layers, one layer by one layer, while lowering the shaping stage.

The digital light processing (DLP) system is a system in which unlike in SLA including irradiation from above with laser beams as active energy rays, in the case of DLP, the liquid curable resin is cured by irradiation from below with active energy rays using a projector. Therefore, the DLP system is characterized in that the shaping stage is moved upward at the time of lamination of each of layers, and the layers are laminated while the shaped object is suspended.

The ink jet optical shaping method is a method in which microdroplets of a curable resin composition for optical shaping are ejected from nozzles so as to draw a predetermined shape pattern and then irradiated with ultraviolet light to form a cured thin film. An example of a specific configuration is described in brief. An optical shaping apparatus used for the ink jet optical shaping method includes a planar stage for optically shaping an intended three-dimensional shaped article, at least one ink jet nozzle which can be moved on a plane at least parallel to the planar stage, and a light source for irradiation with active energy rays. The curable resin composition is ejected from the ink jet nozzle in a desired pattern corresponding to the sectional shape data obtained by dividing the shape of the intended three-dimensional shaped article into a plurality of sectional shapes based on CAD data or the like, forming a resin thin layer composed of the curable resin composition. Then, the resin thin layer is cured by irradiation with active energy rays from the light source. Next, according to a next sectional shape, the curable resin composition is supplied on the cured resin thin layer from the ink jet nozzle. This operation is repeated to laminate photocured layers corresponding to the respective sectional shapes, thereby obtaining a three-dimensional shaped article which is a cured product.

Among these optical three-dimensional shaping methods, the laser beam optical shaping method is preferred.

The three-dimensional shaped article of the present invention has excellent mechanical properties, and thus can be preferably used for applications, for example, an automobile component, a home electric appliance, a building material, an interior, a dental material, etc.

[EXAMPLES]

The present invention is described in detail below by giving examples and comparative examples.

In the examples, number-average molecular weight (Mn) is a value measured by using gel permeation chromatography (GPC) under the following conditions.

Measurement apparatus: HLC-8220 manufactured by Tosoh Corporation
Column: guard column $H_{XL}$-H manufactured by Tosoh Corporation + TSKgel G5000HXL manufactured by Tosoh Corporation + TSKgel G4000HXL manufactured by Tosoh Corporation + TSKgel G3000HXL manufactured by Tosoh Corporation + TSKgel G2000HXL manufactured by Tosoh Corporation
Detector: RI (differential refractometer)
Data processing: SC-8010 manufactured by Tosoh Corporation
Measurement conditions: column temperature 40°C solvent tetrahydrofuran flow rate 1.0 ml/min

Standard: polystyrene
Sample: prepared by filtering a 0.4 mass% tetrahydrofuran solution in terms of resin solid content with a microfilter (100 μl).

(SYNTHESIS EXAMPLE 1: synthesis of polyester resin (1) having (meth)acryloyl group)

In a four-neck flask provided with a stirrer, a thermometer, and a water separator, 245 parts by mass of adipic acid and 355 parts by mass of diethylene glycol were reacted in an inert gas atmosphere at 230°C for 5 hours, producing a polyester resin (1-a). The resultant polyester resin (1-a) had a solid content acid value of 5 mgKOH/g, a hydroxyl value of 350 mgKOH/g, and a number-average molecular weight (Mn) of 530.

Next, in a 2-L reactor, 270 parts by mass of the resultant polyester resin (1-a), 134 parts by mass of acrylic acid, 404 parts by mass of toluene as an organic solvent, 20 parts by mass of sulfuric acid as a catalyst, and 0.4 parts by mass of hydroquinone as a polymerization inhibitor were charged and then reacted under stirring at 105°C to 110°C for 5 hours. Then, 800 parts by mass of water was added to the reaction solution, stirred at 20°C, and then allowed to stand. Next, a lower layer (water layer) containing unreacted acrylic acid, the catalyst, etc. was separated, and toluene was distilled off from an upper layer (organic layer) under reduced pressure at 80°C to produce a polyester resin (1) having a (meth)acryloyl group. The average functional group number of (meth)acryloyl groups possessed by the polyester resin (1) was 2, and the polyester resin (1) had a number-average molecular weight (Mn) of 600 and a viscosity at 25°C of 450 mPa·s. The viscosity is a value measured by an E-type viscometer (25°C).

(SYNTHESIS EXAMPLE 2: synthesis of polyester resin (2) having (meth)acryloyl group)

In a four-neck flask provided with a stirrer, a thermometer, and a water separator, 247 parts by mass of phthalic anhydride and 353 parts by mass of diethylene glycol were reacted in an inert gas atmosphere at 230°C for 5 hours, producing a polyester resin (2-a). The resultant polyester resin (2-a) had a solid content acid value of 5 mgKOH/g, a hydroxyl value of 330 kgKOH/g, and a number-average molecular weight (Mn) of 560.

Next, in a 2 L reactor, 270 parts by mass of the resultant polyester resin (2-a), 126 parts by mass of acrylic acid, 400 parts by mass of toluene as an organic solvent, 20 parts by mass of sulfuric acid as a catalyst, and 0.4 parts by mass of hydroquinone as a polymerization inhibitor were charged and then reacted under stirring at 105°C to 110°C for 5 hours. Then, 800 parts by mass of water was added to the reaction solution, stirred at 20°C, and then allowed to stand. Next, a lower layer (water layer) containing unreacted acrylic acid, the catalyst, etc. was separated, and toluene was distilled off from an upper layer (organic layer) under reduced pressure at 80°C to produce a polyester resin (2) having a (meth)acryloyl group. The average functional group number of (meth)acryloyl groups possessed by the polyester resin (2) was 2, and the polyester resin (2) had a number-average molecular weight (Mn) of 680 and a viscosity at 25°C of 480 mPa·s.

(SYNTHESIS EXAMPLE 3: synthesis of polyester resin (3) having (meth)acryloyl group)

In a four-neck flask provided with a stirrer, a thermometer, and a water separator, 161 parts by mass of terephthalic acid, 115 parts by mass of succinic acid, and 263 parts by mass of neopentyl glycol were reacted in an inert gas atmosphere at 250°C for 7 hours, producing a polyester resin (3-a). The resultant polyester resin (3-a) had a solid content acid value of 5 mgKOH/g, a hydroxyl value of 210 mgKOH/g, and a number-average molecular weight (Mn) of 1150.

Next, in a 2 L reactor, 290 parts by mass of the resultant polyester resin (3-a), 110 parts by mass of acrylic acid, 400 parts by mass of toluene as an organic solvent, 20 parts by mass of sulfuric acid as a catalyst, and 0.4 parts by mass of hydroquinone as a polymerization inhibitor were charged and then reacted under stirring at 105°C to 110°C for 5 hours. Then, 800 parts by mass of water was added to the reaction solution, stirred at 20°C, and then allowed to stand. Next, a lower layer (water layer) containing unreacted acrylic acid, the catalyst, etc. was separated, and toluene was distilled off from an upper layer (organic layer) under reduced pressure at 80°C to produce a polyester resin (3) having a (meth)acryloyl group. The average functional group number of (meth)acryloyl groups possessed by the polyester resin (3) was 2.4, and the polyester resin (3) had a number-average molecular weight (Mn) of 1200 and a viscosity at 25°C of 1500 mPa·s.

(SYNTHESIS EXAMPLE 4: synthesis of polyester resin (4) having (meth)acryloyl group)

In a four-neck flask provided with a stirrer, a thermometer, and a water separator, 247 parts by mass of phthalic anhydride and 353 parts by mass of diethylene glycol were reacted in an inert gas atmosphere at 230°C for 5 hours, producing a polyester resin (4-a). The resultant polyester resin (4-a) had a solid content acid value of 5 mgKOH/g, a hydroxyl value of 330 mgKOH/g, and a number-average molecular weight (Mn) of 560.

Next, in a 2 L reactor, 270 parts by mass of the resultant polyester resin (4-a), 57 parts by mass of acrylic acid, 400 parts by mass of toluene as an organic solvent, 16 parts by mass of sulfuric acid as a catalyst, and 0.4 parts by mass of hydroquinone as a polymerization inhibitor were charged and then reacted under stirring at 105°C to 110°C for 5 hours. Then, 800 parts by mass of water was added to the reaction solution, stirred at 20°C, and then allowed to stand. Next, a lower layer (water layer) containing unreacted acrylic acid, the catalyst, etc. was separated, and toluene was distilled off from an upper layer (organic layer) under reduced pressure at 80°C to produce a polyester resin (4) having a (meth)acryloyl group. The average functional group number of (meth)acryloyl groups possessed by the polyester resin (4) was 1, and the polyester resin (4) had a number-average molecular weight (Mn) of 620 and a viscosity at 25°C of 400 mPa·s.

(SYNTHESIS EXAMPLE 5: synthesis of polyester resin (5) having (meth)acryloyl group)

In a four-neck flask provided with a stirrer, a thermometer, and a water separator, 252 parts by mass of phthalic anhydride and 108 parts by mass of diethylene glycol were reacted in an inert gas atmosphere at 230°C for 5 hours, producing a polyester resin (5-a). The resultant polyester resin (5-a) had a solid content acid value of 5 mgKOH/g, a hydroxyl value of 140 mgKOH/g, and a number-average molecular weight (Mn) of 1500.

Next, in a 2 L reactor, 270 parts by mass of the resultant polyester resin (5-a), 126 parts by mass of acrylic acid, 400 parts by mass of toluene as an organic solvent, 20 parts by mass of sulfuric acid as a catalyst, and 0.4 parts by mass of hydroquinone as a polymerization inhibitor were charged and then reacted under stirring at 105°C to 110°C for 5 hours. Then, 800 parts by mass of water was added to the reaction solution, stirred at 20°C, and then allowed to stand. Next, a lower layer (water layer) containing unreacted acrylic acid, the catalyst, etc. was separated, and toluene was distilled off from an upper layer (organic layer) under reduced pressure at 80°C to produce a polyester resin (5) having a (meth)acryloyl group. The average functional group number of (meth)acryloyl groups possessed by the polyester resin (5) was 3.6, and the polyester resin (5) had a number-average molecular weight (Mn) of 1600 and a viscosity at 25°C of 1800 mPa·s.

(SYNTHESIS EXAMPLE 6: synthesis of epoxy resin having (meth)acryloyl group)

In a four-neck flask provided with a stirrer, a thermometer, and a condenser, 435.1 parts by mass of liquid bisphenol A epoxy resin ("Epiclon 850" manufactured by DIC Corporation, epoxy equivalent: 188 g/eq.; abbreviated as "liquid BPA-type epoxy resin" hereinafter), 163.6 parts by mass of acrylic acid, and 0.1 parts by mass of methoquinone (abbreviated as "MQ" hereinafter) as a polymerization inhibitor were charged and heated to 100°C. Then, 1.2 parts by mass of triphenylphosphine (abbreviated as "TPP" hereinafter) as a catalyst was added. Next, reaction was performed at 100°C for 15 hours, producing an epoxy resin having a (meth)acryloyl group. The epoxy resin had an epoxy equivalent of 20,000 g/eq., an acid value of 0.5 mgKOH/g, and a solution viscosity (butyl acetate solution with a nonvolatile content of 80 mass) of 1.8 Pa·s.

(SYNTHESIS EXAMPLE 7: synthesis of urethane resin having (meth)acryloyl group)

In a four-neck flask provided with a stirrer, a thermometer, and a condenser, 222 parts by mass of isophorone diisocyanate, 1.0 part by mass of tertiary butyl hydroxytoluene, 0.2 parts by mass of MQ, and 0.05 parts by mass of dibutyltin diacetate were added and heated to 70°C, and 160 parts by mass of the polyester resin (1-a) (hydroxyl value: 330 mgKOH/g) produced in Synthesis Example 1 was charged over 1 hour in a divided manner. After the whole amount was charged, reaction was performed at 70°C for 3 hours, and then 118.3 parts by mass of 2-hydroxyethyl acrylate was added and further reacted at 70°C. The reaction was performed until an infrared absorption peat at 2250 cm$^{-1}$ showing an isocyanate group disappeared, producing a urethane resin having (meth)acryloyl groups. The urethane resin had a viscosity of 35 Pa·s.

(EXAMPLE 1: preparation of curable resin composition (1))

In a four-neck flask provided with a stirrer, a thermometer, and a condenser, 70 parts by mass of the polyester resin (1) having a (meth)acryloyl group produced in Synthesis Example 1, 30 parts by mass of acryloyl morpholine ("ACMO" manufactured by KJ Chemicals Corporation), and 2 parts by mass of 2,4,6-trimethylbenzoyl-diphenyl-phosphine oxide ("Omnirad TPO" manufactured by IGM Resins Inc.) were totally charged and stirred at 60°C or less until they were uniformly dissolved, producing a curable resin composition (1).

(EXAMPLES 2 to 10: preparation of curable resin compositions (2) to (10); Example 10 is a Reference Example outside the scope of the claims but useful to understand the invention)

Curable resin compositions (2) to (10) were prepared by the same method as in Example 1 except that the compositions and mixing amounts of the polyester resin having a (meth)acryloyl group and the (meth)acrylate compound were changed as shown in Table 1.

(COMPARATIVE EXAMPLES 1 to 8: preparation of curable resin compositions (C1) to (C8))

Curable resin compositions (C1) to (C8) were prepared by the same method as in Example 1 except that the compositions and mixing amounts of the polyester resin having a (meth)acryloyl group and the (meth)acrylate compound used in Example 1 were changed as shown in Table 2.
The curable resin compositions prepared in Examples 1 to 10 and Comparative Examples 1 to 8 were evaluated as follows.

[Measurement of viscosity]

The viscosity at 25°C of the curable resin composition prepared in each of the examples and the comparative examples was measured by using an E-type viscometer ("TV-22" manufactured by Toki Sangyo Co., Ltd.).

[Formation of test piece]

A dumbbell for a tensile test (according to ASTM D638 TYPE 1) and a test piece for an Izod impact strength test (according to ASTM D256) were formed by using an optical shaping 3D printer ("ACCULAS BA-30S" manufactured by D-Mec Ltd.). Next, the dumbbell for a tensile test and test piece for an Izod impact strength test formed by optical shaping were washed with isopropyl alcohol, dried at room temperature for 1 hour, and then cured in post-curing by UV irradiation on both surfaces (each 10000 mJ/cm$^2$) using a high-pressure mercury lamp, producing a test piece 1 (dumbbell for a tensile test) and a test piece 2 (pest piece for an Izod impact strength test).

[Method for measuring elastic modulus and elongation]

According to ASTM D638, elastic modulus and elongation were measured by a tensile test using the test piece 1 and Autograph "AG-Xplus 100 kN" manufactured by Shimadzu Corporation (load cell: 100 kN, head speed: 5 mm/min, test piece width: 10 mm) .

[Method for measuring Izod impact strength (impact resistance)]

According to ASTM D256, Izod impact strength was measured by using the test piece 2 and "Universal Impact Tester" manufactured by Toyo Seiki Seisaku-sho, Ltd.
Table 1 shows the compositions and evaluation results of the curable resin compositions (1) to (10) prepared in Examples 1 to 10.

Table 1]

| Table 1 | | Example 1 | Example 2 | Example 3 | Example 4 | Example 5 | Example 6 | Example 7 | Example 8 | Example 9 | Example 10 |
|---|---|---|---|---|---|---|---|---|---|---|---|
| Curable resin composition | | (1) | (2) | (3) | (4) | (5) | (6) | (7) | (8) | (9) | (10) |
| Polyester resin having (meth)acryloyl group (1) | Composition (parts by mass) | 70 | 70 | | | | | | | | |
| Polyester resin having (meth)acryloyl group (2) | | | | 70 | 70 | 70 | 70 | 70 | 70 | 70 | |
| Polyester resin having (meth)acryloyl group (3) | | | | | | | | | | | 70 |
| Epoxy resin having (meth)acryloyl group | | | | | 10 | | | | | | |
| Acryloyl morpholine | | 30 | | 30 | 20 | 15 | | | | | 30 |
| Isobornyl methacrylate | | | | | | | 30 | | | | |
| Tricyclodecanedimethanol diacrylate | | | 30 | | | 15 | | 30 | | | |
| Dicyclopentanyl methacrylate | | | | | | | | | 30 | | |
| Phenoxyethyl methacrylate | | | | | | | | | | 30 | |
| Photopolymerization initiator | | 2 | 2 | 2 | 2 | 2 | 2 | 2 | 2 | 2 | 2 |
| Viscosity [mPa·s] | | 92 | 120 | 230 | 850 | 248 | 290 | 135 | 90 | 80 | 1430 |
| Elastic modulus [Mpa] | | 1200 | 1700 | 2600 | 2490 | 2840 | 3200 | 3300 | 2300 | 1600 | 3100 |
| Elongation [%] | | 53 | 15 | 25 | 30 | 17 | 10 | 11 | 22 | 45 | 17 |
| Izod impact strength [J/m] | | 40 | 43 | 86 | 98 | 76 | 87 | 52 | 56 | 68 | 55 |

EP 3 858 876 B1

13

Table 2 shows the compositions and evaluation results of the curable resin compositions (C1) to (C8) prepared in Comparative Examples 1 to 8.

[Table 2]

| Table 2 | | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|
| Curable resin composition | | (C1) | (C2) | (C3) | (C4) | (C5) | (C6) | (C7) | (C8) |
| Polyester resin having (meth)acryloyl group (1) | Composition (parts by mass) | 70 | | 30 | | | | | |
| Polyester resin having (meth)acryloyl group (2) | | | | | | | | | 50 |
| Polyester resin having (meth)acryloyl group (4) | | | | | | | 70 | | |
| Polyester resin having (meth)acryloyl group (5) | | | | | | | | 60 | |
| Epoxy resin having (meth)acryloyl group | | 30 | 25 | | 70 | | | | |
| Urethane resin having (meth)acryloyl group | | | | | | 70 | | | |
| Acryloyl morpholine | | | | | 30 | 30 | 30 | 40 | |
| Tricyclodecanedimethanol diacrylate | | | | 70 | | | | | |
| Phenoxyethyl methacrylate | | | 25 | | | | | | |
| BPA(EO) 10 diacrylate | | | 30 | | | | | | |
| Neopentyl glycol diacrylate | | | 20 | | | | | | |
| DPHA | | | | | | | | | 50 |
| Photopolymerization initiator | | 2 | 2 | 2 | 2 | 2 | 2 | 2 | 2 |
| Viscosity [mPa·s] | | 2480 | 250 | 190 | 680 | 460 | 150 | 670 | 1500 |
| Elastic modulus [Mpa] | | 3420 | 1500 | 3120 | 2970 | 250 | 650 | 3780 | 3560 |
| Elongation [%] | | 8 | 21 | 4 | 3 | 120 | 24 | 2 | 1 |
| Izod impact strength [J/m] | | 42 | 46 | 15 | 28 | 40 | 18 | 36 | 23 |

EP 3 858 876 B1

15

In Tables 1 and 2, "Photopolymerization initiator" represents 2,4,6-trimethylbenzoyl-diphenyl-phosphine oxide ("Omnirad TPO" manufactured by IGM Resins Inc.).

In Tables 1 and 2, the Tg of "Phenoxyethyl methacrylate" is 47°C.

In Table 2, "BPA(EO) 10 diacrylate" represents ethylene oxide-modified (10-mol added) bisphenol A diacrylate, and the Tg thereof is 3°C.

In Table 2. the Tg of "Neopentyl glycol dimethacrylate" 56°C.

In Table 2, "DPHA" represents dipentaerythritol hexaacrylate, and the Tg thereof is 68°C.

Examples 1 to 10 shown in Table 1 are examples using the curable resin composition of the present invention. It was confirmed that the curable resin composition of the present invention has low viscosity, and the cured product of the durable resin composition has excellent mechanical properties.

On the other hand, Comparative Example 1 shown in Table 2 is an example of the curable resin composition not using the (meth)acrylate compound, and it was confirmed that the curable resin composition of Comparative Example 1 has high viscosity and the cured product thereof has excellent elastic modulus but has unsatisfactory elongation.

Comparative Examples 2, 4, and 5 are examples of the curable resin composition not using the polyester resin having a (meth)acryloyl group, and it was confirmed that cured products of the curable resin compositions of Comparative Examples 2 and 5 have unsatisfactory elastic modulus, and the cured product of the curable resin composition of Comparative Example 4 has unsatisfactory elongation.

Comparative Example 3 is an example of the curable resin composition in which the content of the polyester resin is less than 50% by mass, and it was confirmed that the cured product of the curable resin composition of Comparative Example 3 has excellent elastic modulus but has unsatisfactory elongation and impact resistance.

Comparative Examples 6 and 7 are examples using the polyester resin in which the average functional group number of (meth)acryloyl groups possessed by the polyester resin is out of the range of the present invention, and it was confirmed that the cured product of the curable resin composition of Comparative Example 6 has unsatisfactory elastic modulus and impact resistance, and the cured product of the curable resin composition of Comparative Example 7 has unsatisfactory elongation.

Comparative Example 8 is an example of the curable resin composition not using the monofunctional (meth)acrylate compound and difunctional (meth)acrylate compound, and it was confirmed that the cured product of the curable resin composition of Comparative Example 7 has unsatisfactory elongate and also has unsatisfactory impact resistance.

## Claims

1. A curable resin composition comprising a polyester resin (A) having a (meth)acryloyl group and a monofunctional (meth)acrylate compound (B1) and/or a difunctional (meth)acrylate compound (B2),

   wherein the average functional group number of (meth)acryloyl groups possessed by the polyester resin (A) is within a range of 1.8 or more and 2.2 or less;
   the content of the polyester resin (A) in the curable resin composition is 50% by mass or more; and
   the monofunctional (meth)acrylate compound (B1) is one or more selected from the group consisting of (meth)acryloyl morpholine, isobornyl (meth)acrylate, dicyclopentenyl (meth)acrylate, and dicyclopentanyl (meth)acrylate.

2. The curable resin composition according to Claim 1, wherein a polymer of the monofunctional (meth)acrylate compound (B1) and/or the difunctional (meth)acrylate compound (B2) has a glass transition temperature of 80°C or more.

3. The curable resin composition according to Claim 1 or 2, wherein the polyester resin (A) is a reaction product of a polyhydric carboxylic acid including an aromatic polyhydric carboxylic acid, (poly)alkylene glycol, and a compound having a (meth)acryloyl group and a carboxyl group in one molecule.

4. A cured product comprising a curing reaction product of the curable resin composition according to any one of Claims 1 to 3.

5. The cured product according to Claim 4, wherein curing conditions include irradiation with active energy rays.

6. A three-dimensional shaped article comprising the cured product according to Claim 4 or 5.

**Patentansprüche**

1. Härtbare Harzzusammensetzung, umfassend ein Polyesterharz (A) mit einer (Meth)acryloylgruppe und eine monofunktionelle (Meth)acrylatverbindung (B1) und/oder eine difunktionelle (Meth)acrylatverbindung (B2),

   wobei die durchschnittliche funktionelle Gruppe-Anzahl der (Meth)acryloylgruppen, die das Polyesterharz (A) besitzt, in einem Bereich von 1,8 oder mehr und 2,2 oder weniger liegt;
   der Gehalt des Polyesterharzes (A) in der härtbaren Harzzusammensetzung 50 Massen-% oder mehr beträgt; und
   die monofunktionelle (Meth)acrylatverbindung (B1) eine oder mehrere ist, ausgewählt aus der Gruppe, bestehend aus (Meth)acryloylmorpholin, Isobornyl(meth)acrylat, Dicyclopentenyl(meth)acrylat und Dicyclopentanyl(meth)acrylat.

2. Härtbare Harzzusammensetzung nach Anspruch 1, wobei ein Polymer der monofunktionellen (Meth)acrylatverbindung (B1) und/oder der difunktionellen (Meth)acrylatverbindung (B2) eine Glasübergangstemperatur von 80°C oder mehr aufweist.

3. Härtbare Harzzusammensetzung nach Anspruch 1 oder 2, wobei das Polyesterharz (A) ein Reaktionsprodukt aus einer mehrwertigen Carbonsäure, einschließlich einer aromatischen mehrwertigen Carbonsäure, (Poly)alkylenglykol und einer Verbindung mit einer (Meth)acryloylgruppe und einer Carboxylgruppe in einem Molekül ist.

4. Gehärtetes Produkt, umfassend ein Härtungsreaktionsprodukt der härtbaren Harzzusammensetzung nach einem der Ansprüche 1 bis 3.

5. Gehärtetes Produkt nach Anspruch 4, wobei die Härtungsbedingungen die Bestrahlung mit aktiven Energiestrahlen einschließen.

6. Dreidimensionaler Formkörper, umfassend das gehärtete Produkt nach Anspruch 4 oder 5.

**Revendications**

1. Composition de résine durcissable comprenant une résine de polyester (A) ayant un groupe (méth)acryloyle et un composé de (méth)acrylate monofonctionnel (B1) et/ou un composé de (méth)acrylate difonctionnel (B2),

   dans laquelle le nombre moyen de groupes fonctionnels de groupes (méth)acryloyle possédés par la résine de polyester (A) se situe dans une plage de 1,8 ou plus à 2,2 ou moins ;
   la teneur de la résine de polyester (A) dans la composition de résine durcissable est de 50 % en masse ou plus ; et
   le composé de (méth)acrylate monofonctionnel (B1) est l'un ou plusieurs choisis dans le groupe constitué par (méth)acryloylmorpholine, (méth)acrylate d'isobornyle, (méth)acrylate de dicyclopentényle et (méth)acrylate de dicyclopentanyle.

2. Composition de résine durcissable selon la revendication 1, dans laquelle un polymère du composé de (méth)acrylate monofonctionnel (B1) et/ou du composé de (méth)acrylate difonctionnel (B2) a une température de transition vitreuse de 80 °C ou plus.

3. Composition de résine durcissable selon la revendication 1 ou 2, dans laquelle la résine de polyester (A) est un produit de réaction d'un acide carboxylique polyhydrique comprenant un acide carboxylique polyhydrique aromatique, d'un (poly)alkylène glycol et d'un composé ayant un groupe (méth)acryloyle et un groupe carboxyle dans une molécule.

4. Produit durci comprenant un produit de réaction de durcissement de la composition de résine durcissable selon l'une quelconque des revendications 1 à 3.

5. Produit durci selon la revendication 4, dans lequel les conditions de durcissement comprennent une irradiation avec des rayons d'énergie active.

6. Article de forme tridimensionnelle comprenant le produit durci selon la revendication 4 ou 5.

**EP 3 858 876 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H02248414 A
- JP 2004010771 A
- JP 2015010169 A
- JP 2015010164 A
- JP 7228644 A
- JP 2008189782 A